# EUROPEAN PATENT SPECIFICATION

(11) **EP 3 595 412 B1**
(45) Date of publication and mention of the grant of the patent: **06.03.2024**
(21) Application number: 19182244.4
(22) Date of filing: 25.06.2019
(51) Int. Cl.: H05B 45/3578, H05B 45/357

(54) **LED REPLACEMENT LAMP COMPATIBLE WITH A BALLAST OF A HIGH-PRESSURE SODIUM LAMP AND A BALLAST OF A MERCURY VAPOR LAMP**
LED-ERSATZLAMPE, DIE KOMPATIBEL MIT EINEM VORSCHALTGERÄT EINER NATRIUMHOCHDRUCKLAMPE UND EINEM VORSCHALTGERÄT EINER QUECKSILBERDAMPFLAMPE IST
LAMPE DE REMPLACEMENT À DEL COMPATIBLE AVEC UN BALLAST D'UNE LAMPE À SODIUM HAUTE PRESSION ET UN BALLAST D'UNE LAMPE À VAPEUR DE MERCURE

(30) Priority: 13.07.2018 EP 18183286
(43) Date of publication of application: 15.01.2020
(73) Proprietor: Signify Holding B.V., 5656 AE Eindhoven (NL)
(72) Inventor: MALYNA, Dmytro, Viktorovych, 5656 AE Eindhoven (NL); VAN MEEL, Marcus, Cornelis, 5656 AE Eindhoven (NL); VAN BODEGRAVEN, Tijmen, Cornelis, 5656 AE Eindhoven (NL); DE HEER GALISTEO, Raimundo, 5656 AE Eindhoven (NL)
(74) Representative: Stil, Lambert Johannes

(56) References cited:
- WO-A1-2016/187845
- WO-A1-2018/054841
- US-A1- 2014 320 007

## Description

### FIELD OF THE INVENTION

The invention relates to an LED replacement lamp compatible with a ballast of a high-pressure Sodium lamp and a ballast of a mercury vapor lamp. The invention further relates to a luminaire comprising an LED replacement lamp and a ballast. The invention further relates to a method for controlling an LED replacement lamp compatible.

### BACKGROUND OF THE INVENTION

Nowadays, LED lamps are replacing conventional high intensity discharge (HID) lamps. Most of the HID technology utilizes electromagnetic (EM) gear. The gear is a coil with a capacitor for power correction (PF-cap). The value of inductance and capacitance (L and C) are primary parameters of the EM gear. The L and C are tuned to the lamp voltage and input mains voltage that the lamp delivers its rated power e.g. 250W, 400W.

The HID lamp requires a high-voltage spike (several kilovolts) for starting up. The high-voltage spike is produced by a device that is called an ignitor. The ignitor produces high-voltage spikes when it detects that the lamp is not burning. The ignitor is a separate device (a small box) that is added to HID gear. Some HID lamps contain an internal ignitor. In this case the external ignitor is not present. Historically the internal ignitor appeared in Mercury-Vapor lamps (MV). Later the MV-lamps were succeeded by Metal Halide (MH) lamps. These lamps are available in two types, either with internal or with external ignitor. Both MH and MV lamps utilise the same gear with the same values of L and C. Further in the text this electromagnetic gear is called a Mercury-vapor ballast. The ballast can be extended with the ignitor when the MH-lamp without an internal ignitor is used. The ignitor of MH-lamp usually activates when a peak voltage of c.a. 230V-250V is detected at output terminals of the ballast.

In the last decades High-Pressure Sodium lamps (SON) lamps have been developed. These lamps require different values of primary parameters (L and C) of the gear because of the different voltage shape of the SON lamp. This gear is called SON-gear. The SON lamp never contains an internal ignitor and requires the external ignitor for starting up. The lamp voltage at which the ignitor of SON lamp activates is an RMS value of 150V and that is lower than the RMS trigger voltage of the ignitor of the MH-lamp.

WO 2016/187845 discloses a solid state lighting driver circuit that has a switch connected across its input that selectively drives the circuit with a ballast output, or provides a low impedance path for the ballast output so that the ballast goes into selfprotection mode. This means that the driver circuit is compatible with an electronic ballast but is well regulated.

US 2014/0320007 discloses an AC/DC power converter that is coupled between a fluorescent ballast circuit and a set of light emitting diodes forming an LED lamp. The power converter converts an AC output from the ballast circuit to a DC current applied to drive operation of the LEDs. The power converter transforms and rectifies the AC output from the ballast circuit to generate a DC output current. An open load protection circuit is coupled to protect the ballast circuit when the LED lamp is not connected. Current control is provided by a transistor having a source/drain conduction path coupled to shunt the DC output current in response to a control signal having a duty cycle generated as a function of a zero-crossing of the AC output and a sensed value of the DC output current applied to the LED lamp.

### SUMMARY OF THE INVENTION

It is an objective of the invention to provide an LED replacement lamp compatible with a ballast of a high-pressure Sodium lamp and a ballast of a mercury vapor lamp.

To overcome this concern, the present invention provides an LED replacement lamp compatible with a ballast of a high-pressure Sodium lamp and a ballast of a mercury vapor lamp according to claim 1.

A major problem arising for LED replacement lamps that are compatible with both a ballast of a high-pressure Sodium lamp and a ballast of a mercury vapor lamp is that the ignitor of the mercury vapor lamp can turn on when the root mean square input voltage is too large. The LED string voltage is set below the activation voltage of the ignitor. However, when the input voltage of the ballast suddenly rises, the ignitor can be activated anyhow. This activation of the ignitor can be detected. To stop the ignitor, the voltage provided to the LED replacement lamp needs to be reduced. A shunt switch integrated in the rectifier circuit or placed in front or after the rectifier circuit provides a short circuit path such that for a short period of time the voltage seen at the input of the LED replacement lamp is set to approximately zero Volts. This effectively reduces the root mean square voltage at the input of the LED replacement lamp, allowing the ignitor to turn off.

In a further example the shunt switch is arranged for regulating power to the LED load using a load current feedback.

Not only can the shunt switch be used for reducing the root mean square of the input voltage so as to turn off the ignitor, the shunt switch can also be used for controlling the amount of current provided to the LED load. Controlling of the LED load current can provide dimmability of the light output of the LED load. This can for example be done by controlling the duty cycle of the shunt switch or by driving the shunt switch in a linear way.

In a further example, after turn-off of the ignitor, the average voltage at the output connection is restored to its value before detection of the activation of the ignitor.

After turn-off of the ignitor is achieved, the duty cycle of the shunt switch has been increased such that the light output is lower than desired. After turn-off of the ignitor, the duty cycle can be set back to its duty cycle before the ignitor got activated.

In a further example, when no ignitor is active, the average voltage at the output is just below 150V.

In a preferred example, the optimum LED voltage for operating an LED replacement lamp is at 170 V.

In a further example, the shunt switch is integrated in the rectifier circuit.

This improves the efficiency and reduced component count of the LED replacement lamp because no additional switch is required.

In a further example, the sensing of activation of the ignitor of the ballast is based on a detection of a voltage dip from the voltage received from the ballast.

When the ignitor is active, this can be observed as rapid voltage deviations such as a voltage dip being present at the input voltage of the LED replacement lamp or the voltage received from the ballast.

In a further example, the LED replacement lamp further comprises:
- a sensing module for sensing the voltage dip;
- a first counter for counting a number of voltage dips and outputting a control signal for the shunt switch upon reaching a desired amount of voltage dips;
- a second counter for resetting the control signal for the shunt switch after a delay time.

This example provides more details on how the detection of the rapid voltage deviation is done, how the detection signal is processed and how the shunt switch responds to it.

In a further example, the LED replacement lamp further comprises:
- a diode (D5) coupled between an output connection of the rectifier circuit and one of the output connections,
- a capacitor (C4) coupled in parallel to the LED load (LED).

The capacitor provides smoothening of the voltage over the LED load such that the current through the LED load is more stable and thus improves the quality of lighting. The diode prevents the capacitor from discharging through the shunt switch when the shunt switch is active.

In another example, a luminaire comprises:
- a ballast being one of a high-pressure sodium lamp and a mercury vapor lamp type, and
- an LED replacement lamp.

In another example, the luminaire has a power factor of 0.8 or more.

In this example, an optimized voltage for driving the LED load has been chosen such that the LED replacement lamp together with any of the Mercury Vapor ballast or high-pressure Sodium ballast has a high power factor.

The present invention also provides a corresponding method for controlling an LED replacement lamp compatible with a ballast of a high-pressure Sodium lamp and a ballast of a mercury vapor lamp according to claim 9.

### BRIEF DESCRIPTION OF THE DRAWINGS

Examples of the invention will now be described with reference to the accompanying drawings, in which:
Fig. 1 shows an example of a known ballast circuit for driving a conventional HID lamp
Fig. 2 shows an example of a circuit for an LED replacement lamp as proposed in this invention.
Fig. 3 shows an example of a graph showing the power factor of different ballast types depending on the voltage provided to the lamp.
Figs. 4a and 4b show examples of voltages and currents provided to a conventional lamp and an LED replacement lamp respectively.
Fig. 5 show an example of the relation of the square voltage at the input of the LED replacement lamp and the voltage required for triggering the ignitor.
Fig. 6 show an example of a rapid voltage change in the input voltage of the LED replacement lamp caused by the ignitor.
Fig. 7 shows an exemplary circuit for detecting the active ignitor, the creation of a control signal and the control of the shunt switch.

### DETAILED DESCRIPTION OF THE EMBODIMENTS

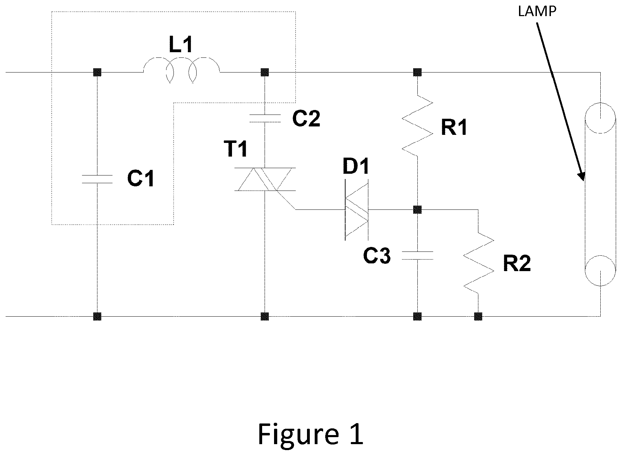

Figure 1 shows a known ballast circuit wherein an ignitor is used for igniting a lamp. The lamp connected in this example is a conventional lamp LAMP, such as a metal halide lamp, or a high-pressure sodium lamp, or a mercury-vapor lamp, that requires an ignition voltage in the order of 1000 Volts. This ignition voltage is created by the ignitor at start up of the ballast. The ballast for a conventional lamp consists of an inductor L1. A capacitor C1 can be placed over the inputs of the ballast for providing power factor correction. The ignitor is placed after the ballast and provides a resonance capacitor C2 during startup of the lamp LAMP. During startup, the voltage over capacitor C3 will start to build up, leading into a breakdown of the DIAC D1. This causes the TRIAC T1 to conduct and capacitor C2 will be coupled at the output of the inductor. This provides a resonant voltage swing up to the ignition voltage of the conventional lamp. The lamp will ignite, causing a low voltage to be present in parallel with the ignitor. This low voltage is not enough for charging capacitor C3 up to breakdown voltage of DIAC D1 and prevents the TRIAC T1 to turn on after a zero crossing of the voltage provided to the ballast, which in its turn prevents capacitor C2 to provide a resonant voltage spike. In short, when the lamp is powered, the ignitor is bypassed and cannot be turned on. Because the ignitor is only active if the voltage over capacitor C3 exceeds the breakdown voltage of DIAC D1, the ignitor reacts on the root-mean-square (RMS) voltage provided rather than an instantaneous voltage.

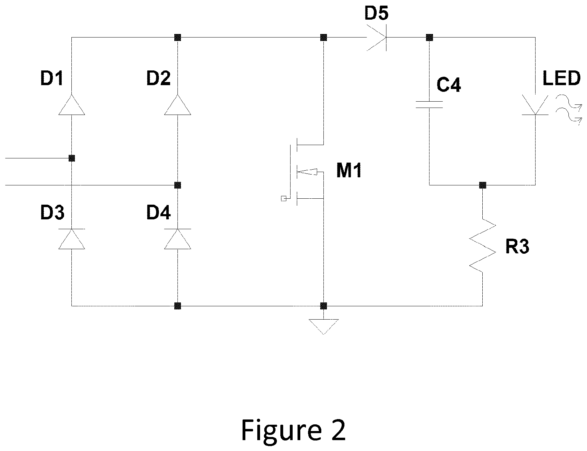

Figure 2 shows an example of a retrofittable LED lamp that can replace the conventional lamp without modification on the peripheral circuits such as wiring or removal of the ballast. The retrofittable LED lamp comprises a rectifier circuit D1, D2, D3, D4. This circuit rectifies the voltage provided by the ballast and outputs a rectified ballast voltage. A shunt switch M1 is placed in parallel to the output connections of the rectifier circuit. The shunt switch M1 can also be integrated in the rectifier circuit D1, D2, D3, D4 by replacing the diodes D3 and D4 for switching elements that, when both conducting, short the input of the rectifier circuit D1, D2, D3, D4 such that a similar function is achieved as the shunt switch M1 as depicted in figure 2. Alternative shunting embodiments are possible, which are well known to the skilled person.

The output of the rectifier circuit may be coupled to an LED load LED via a diode D5. A capacitor C4 can be coupled in parallel with the LED load LED, which reduces the voltage ripple over the LED load LED. When the shunt switch is active, the capacitor C4 cannot be discharged because of diode D5 blocking the discharging path of the capacitor C4 into the shunt switch M1. If no capacitor C4 is present across the LED load LED, the diode D5 may be omitted. The current flowing through the LED load LED can be measured with sensing resistor R3 for providing feedback to regulate the current provided to the LED load LED.

The retrofittable LED lamp as proposed by the invention is compatible with multiple types of ballasts. Another type of ballast the retrofittable LED lamp can be compatible with is a high-pressure Sodium ballast. This ballast is designed to operate a lamp that operates at a voltage at around 130 Volts, where the metal halide or Mercury-Vapor ballast is designed to operate a lamp at around 210 Volts.

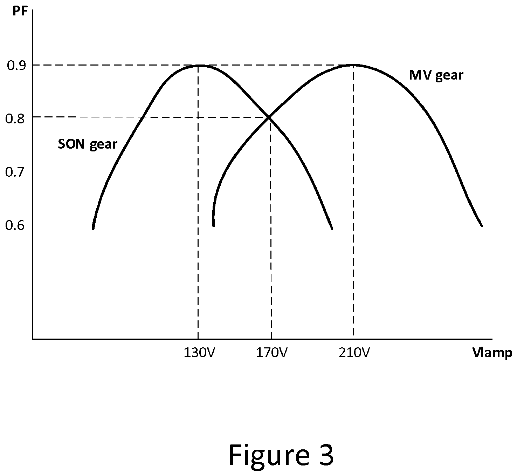

Figure 3 shows an exemplary relation between the lamp voltage V_lamp and the power factor of the ballast. The high-pressure Sodium ballast has in this example an optimum power factor at 130 V. The Mercury-Vapor ballast has in this example an optimum power factor at 210 V. The retrofittable LED lamp is designed to have LED voltage of 170 V. When the retrofittable LED lamp is coupled to a high-pressure Sodium ballast, the power factor will be around 0.8. The power factor will also be 0.8 in this example when the retrofittable LED lamp is coupled to a Mercury-Vapor ballast. Although the power factor for any of the ballast types is lower than the optimum power factor, the retrofittable LED lamp is capable of operating with all of the aforementioned ballast types. Furthermore, the lamp voltage V_lamp has to be chosen such that the voltage does not exceed the trigger voltage of the ignitor of a Mercury-Vapor ballast.

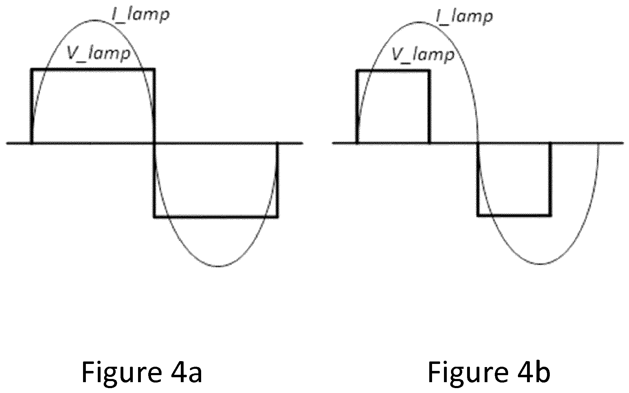

Figures 4a shows the voltage that is applied to the ignitor when the ballast is powering an HID lamp. The voltage applied to the ignitor is the RMS voltage of the lamp voltage V_lamp provided over one period. The lamp voltage V_lamp has a rectangular waveform because the voltage is created by the HID lamp. This voltage resembles the voltage created by the spark gap in the HID lamp. Because the ballast provides the voltage throughout the entire mains cycle, the voltage will remain constant and only commutates when the ballast current commutates. In this example, the capacitor C1 in the ballast provides a power factor of 1. Therefore, the lamp current I_lamp is in phase with the lamp voltage V_lamp.

Figure 4b shows the voltage applied to the ignitor when the ballast is powering an LED lamp. A duty cycle of the shunt switch can be seen in figure 4b. The lamp voltage V_lamp is zero during the time the shunt switch is active. This allows power control to the LED load. This furthermore reduces the RMS voltage present at the ignitor. Lamp current I_lamp flows either through the LED load when the shunt switch is not active or through the shunt switch when the shunt switch is active.

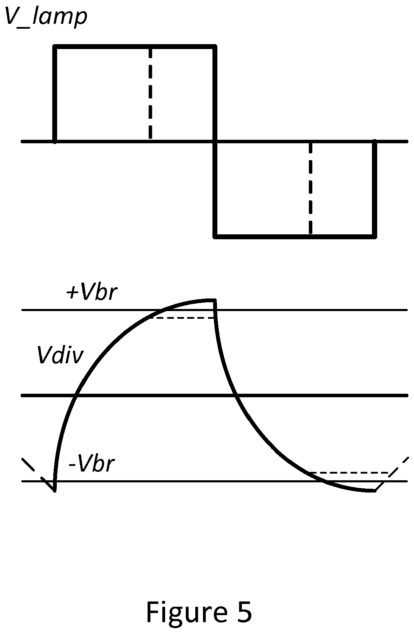

Figure 5 shows the voltage Vdiv over the voltage divider resistor R2 of the ballast. The voltage here represents an AC voltage going from a positive value to a negative value. To prevent the ignitor from activating, the voltage over the voltage divider resistor R2 needs to stay below a threshold +Vbr or -Vbr. This means that the voltage over the voltage divider resistor R2 needs to stay within a voltage band between +Vbr and -Vbr.

When the voltage over the voltage divider resistor R2 exceeds this voltage, the ignitor will be triggered. To stop the ignitor from operating, the voltage has to be lowered more than the threshold level.

The continuous line in the upper figure shows a lamp voltage V_lamp that is uninterrupted. As can be seen by the continuous line in the lower figure, the voltage over the voltage divider resistor R2 will rise over the threshold +Vbr or -Vbr.

The dashed lines in the upper figure shows a lamp voltage V_lamp that is interrupted by the shunt switch, such as is provided by the retrofittable LED lamp. The lamp voltage V_lamp is near to zero when the shunt switch is active. As can be seen by the dashed line in the lower figure, the voltage over the voltage divider resistor R2 will not rise when the shunt switch is active. The voltage will not exceed the threshold +Vbr or -Vbr and can therefore not trigger the ignitor.

Regardless of the provided prevention of the ignitor to trigger, a voltage surge can provide a voltage over the voltage divider resistor R2, that might trigger the ignitor. The retrofittable LED lamp can detect the activation of the ignitor by sensing the input voltage Vin.

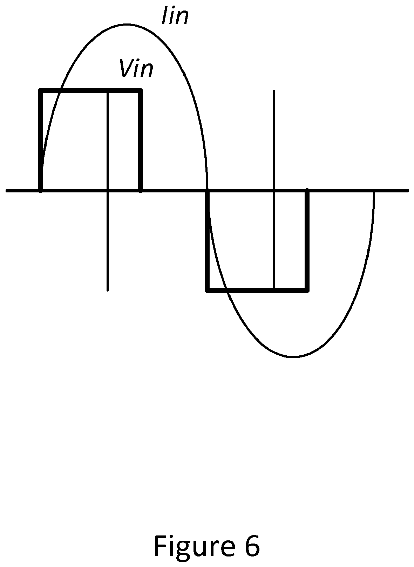

Figure 6 shows an exemplary waveform of an input voltage Vin provided at the input of the retrofittable LED lamp. This input voltage Vin contains high frequency components, shown as voltage dips, as a result of the triggering of the ignitor. These voltage dips can be measured and used as a detection signal for controlling the shunt switch. If the duty cycle of the shunt switch is increased, more shunting of the input voltage Vin is done and hence the voltage over the voltage divider resistor R2 will reduce. The duty cycle will be increased such that the voltage over voltage divider resistor R2 has dropped such that the ignitor stops. After the stopping of the ignitor, the duty cycle of the shunt switch can be increased again to its previous, normal operating value. The stopping of the ignitor and returning to the original duty cycle of the shunt switch can be done within 500 ms, or alternatively even 100 ms.

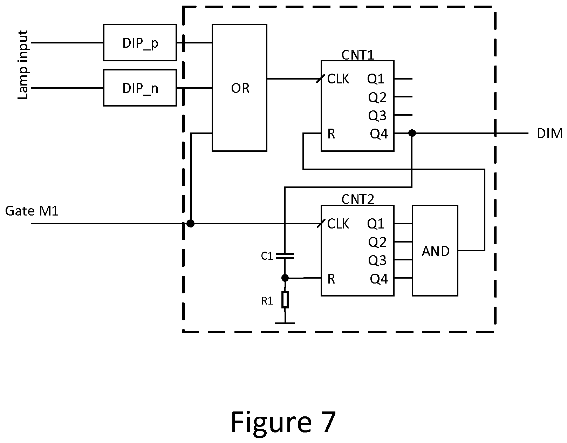

Figure 7 shows an exemplary implementation of the invention. The voltage dips at the input voltage Vin as shown in figure 6 are detected by the sensing modules DIP_p for the positive dip and DIP_n for the negative dip that are high when LEDs are attached to the input of the lamp and are low when either the dip or shunting occurs. The signals provided by these sensing modules are combined together with the shunt switch control signal in a logic OR gate. The control signal of the shunt switch is combined with the signals provided by the sensing modules DIP_p and DIP_n such that if the shunt switch is active the low level from DIP_p or DIP_n due to shunting is substituted by high gate M1 control signal. The output of this logic OR gate is coupled to the clock input CLK of a first counter CNT1. In this example, the pulses are counted by the first counter CNT1 and when seven pulses are counted, the output Q4 will be high. The high output of the first counter CNT1 provides a dimming signal DIM for controlling the shunt switch M1 such that the duty cycle will be increased and hence the input RMS voltage will be reduced such that the ignitor will be turned off. In another example, only one pulse can be detected on which the first counter CNT1 provides a high output on Q4. The output of the first counter CNT1 is further coupled to a RESET input of a second counter CNT2 via a differentiating network consisting of a capacitor C1 and resistor R1. The CLK input of the second counter CNT2 is coupled to the control signal of the shunt switch M1. The second counter CNT2 is reset when the output of the first counter CNT1 gets high. After fifteen pulses generated by the control signal of the shunt switch M1, the outputs of the second counter CNT2 are high. The outputs of the second counter CNT2 are coupled to a logic AND gate. When the second counter has counted the fifteen pulses, the output of the logic AND gate will be high. The counting up to fifteen pulses generates a delay for resetting the control signal back to its original value. This high signal will furthermore reset the first counter CNT1 allowing the first counter to detect new voltage dips and setting the control signal DIM to a low value.

## Claims

1. An LED replacement lamp compatible with a ballast of a high-pressure Sodium lamp and a ballast of a mercury vapor lamp, the LED replacement lamp comprising:
- input connections for receiving a voltage from a ballast;
- a rectifier circuit (D1, D2, D3, D4) for rectifying the received voltage into a DC voltage;
- a shunt switch (M1) arranged for regulating power to an LED load (LED), the shunt switch being coupled between output connections of the rectifier circuit;
- output connections for connecting to the LED load;
- a sensing circuit for sensing a parameter of the received voltage or the rectified voltage,
**characterized in that** the sensing circuit is arranged to sense activation of an ignitor of a mercury vapor ballast by detecting a high frequency component as a result of a triggering of the ignitor, and wherein the shunt switch (M1) is arranged to be operated such that a root mean square voltage at the input connection is reduced such that the ignitor turns off.

2. The LED replacement lamp according to claim 1, wherein the shunt switch (M1) is arranged for regulating power to the LED load (LED) using a load current feedback (R1).

3. The LED replacement lamp according to any of the preceding claims, wherein the shunt switch (M1) is integrated in the rectifier circuit (D1, D2, D3, D4).

4. The LED replacement lamp according to any of the preceding claims, wherein the sensing of activation of the ignitor of the ballast is based on a detection of a voltage deviation in the form of a voltage dip from the voltage received from the ballast.

5. The LED replacement lamp according to claim 4, further comprising:
- a sensing module (DIP_p, DIP_n) for sensing the rapid voltage deviation;
- a first counter (CNT1) for counting a number of voltage dips and outputting a control signal for the shunt switch (M1) upon reaching a desired amount of voltage dips;
- a second counter (CNT2) for resetting the control signal (DIM) for the shunt switch (M1) after a delay time.

6. The LED replacement lamp according to any of the preceding claims, further comprising:
- a diode (D5) coupled between an output connection of the rectifier circuit and one of the output connections,
- a capacitor (C4) for coupling in parallel to the LED load (LED).

7. A luminaire comprising:
- a ballast being one of a high-pressure Sodium lamp and a mercury vapor lamp type, and
- an LED replacement lamp according to any of the preceding claims.

8. The luminaire according to claim 7, wherein the power factor of the luminaire is 0.8 or more.

9. A method for controlling an LED replacement lamp compatible with a ballast of a high-pressure Sodium lamp and a ballast of a mercury vapor lamp, the method comprising the steps of:
- sensing of activation of an ignitor of a mercury vapor ballast by detecting a high frequency component as a result of a triggering of the ignitor;
- upon detection of the activation of the ignitor, increasing a duty cycle of a shunt switch (M1) comprised in the LED replacement lamp, such that a root mean square voltage at an input connection of the LED replacement lamp is reduced such that the ignitor turns off.

## Patentansprüche

1. LED-Ersatzlampe, die mit einem Vorschaltgerät einer Hochdrucknatriumlampe und einem Vorschaltgerät einer Quecksilberdampflampe kompatibel ist, die LED-Ersatzlampe umfassend:
- Eingangsverbindungen zum Empfangen einer Spannung von einem Vorschaltgerät;
- eine Gleichrichterschaltung (D1, D2, D3, D4) zum Gleichrichten der empfangenen Spannung in eine Gleichstromspannung;
- einen Nebenschlussschalter (M1), der zum Regulieren von Leistung an einen LED-Verbraucher (LED) angeordnet ist, wobei der Nebenschlussschalter zwischen Ausgangsverbindungen der Gleichrichterschaltung gekoppelt ist;
- Ausgangsverbindungen zum Verbinden mit dem LED-Verbraucher;
- eine Erfassungsschaltung zum Erfassen eines Parameters der empfangenen Spannung oder der gleichgerichteten Spannung,
**dadurch gekennzeichnet, dass** die Erfassungsschaltung angeordnet ist, um eine Aktivierung eines Zünders eines Quecksilberdampfvorschaltgeräts durch Detektieren einer Hochfrequenz-Komponente infolge einer Auslösung des Zünders zu erfassen, und wobei der Nebenschlussschalter (M1) angeordnet ist, um derart betrieben zu werden, dass ein quadratisches Mittel der Spannung an der Eingangsverbindung derart reduziert wird, dass der Zünder sich ausschaltet.

2. LED-Ersatzlampe nach Anspruch 1, wobei der Nebenschlussschalter (M1) zum Regulieren von Leistung an den LED-Verbraucher (LED) unter Verwendung einer Verbraucherstromrückkopplung (R1) angeordnet ist.

3. LED-Ersatzlampe nach einem der vorstehenden Ansprüche, wobei der Nebenschlussschalter (M1) in die Gleichrichterschaltung (D1, D2, D3, D4) integriert ist.

4. LED-Ersatzlampe nach einem der vorstehenden Ansprüche, wobei das Erfassen der Aktivierung des Zünders des Vorschaltgeräts auf einer Detektion einer Spannungsabweichung in der Form eines Spannungseinbruchs von der Spannung basiert, die von dem Vorschaltgerät empfangen wird.

5. LED-Ersatzlampe nach Anspruch 4, ferner umfassend:
- ein Erfassungsmodul (DIP_p, DIP_n) zum Erfassen der rapiden Spannungsabweichung;
- einen ersten Zähler (CNT1) zum Zählen einer Anzahl von Spannungseinbrüchen und Ausgeben eines Steuersignals für den Nebenschlussschalter (M1) bei Erreichen einer gewünschten Menge an Spannungseinbrüchen;
- einen zweiten Zähler (CNT2) zum Zurücksetzen des Steuersignals (DIM) für den Nebenschlussschalter (M1) nach einer Verzögerungszeit.

6. LED-Ersatzlampe nach einem der vorstehenden Ansprüche, ferner umfassend:
- eine Diode (D5), die zwischen einer Ausgangsverbindung der Gleichrichterschaltung und einer der Ausgangsverbindungen gekoppelt ist,
- einen Kondensator (C4) zum Parallelkoppeln mit dem LED-Verbraucher (LED).

7. Leuchte, umfassend:
- ein Vorschaltgerät, das eines von einer Art Hochdrucknatriumlampe und einer Quecksilberdampflampe ist, und
- eine LED-Ersatzlampe nach einem der vorstehenden Ansprüche.

8. Leuchte nach Anspruch 7, wobei der Leistungsfaktor der Leuchte 0,8 oder mehr beträgt.

9. Verfahren zum Steuern einer LED-Ersatzlampe, die mit einem Vorschaltgerät einer Hochdrucknatriumlampe und einem Vorschaltgerät einer Quecksilberdampflampe kompatibel ist, das Verfahren umfassend die Schritte:
- Erfassen der Aktivierung eines Zünders von einem Quecksilberdampfvorschaltgerät durch Detektieren einer Hochfrequenz-Komponente infolge einer Auslösung des Zünders;
- bei Detektion der Aktivierung des Zünders, Erhöhen eines Arbeitszyklus eines Nebenschlussschalters (M1), der in der LED-Ersatzlampe enthalten ist, derart, dass ein quadratisches Mittel der Spannung an einer Eingangsverbindung der LED-Ersatzlampe derart reduziert wird, dass der Zünder sich ausschaltet.

## Revendications

1. Lampe de remplacement à DEL compatible avec un ballast d'une lampe au sodium haute pression et un ballast d'une lampe à vapeur de mercure, la lampe de remplacement à DEL comprenant :
- des connexions d'entrée pour recevoir une tension à partir d'un ballast ;
- un circuit redresseur (D1, D2, D3, D4) pour redresser la tension reçue en une tension continue ;
- un interrupteur de shunt (M1) conçu pour réguler la puissance d'une charge de DEL (DEL), l'interrupteur de shunt étant couplé entre des connexions de sortie du circuit redresseur ;
- des connexions de sortie pour la connexion à la charge de DEL ;
- un circuit de détection pour détecter un paramètre de la tension reçue ou de la tension redressée,
**caractérisée en ce que** le circuit de détection est conçu pour détecter l'activation d'un igniteur d'un ballast à vapeur de mercure en détectant une composante haute fréquence suite à un déclenchement de l'igniteur, et dans lequel l'interrupteur de shunt (M1) est conçu pour être actionné de telle sorte qu'une tension quadratique moyenne au niveau de la connexion d'entrée est réduite pour que l'igniteur se désactive.

2. Lampe de remplacement à DEL selon la revendication 1, dans laquelle l'interrupteur de shunt (M1) est conçu pour réguler la puissance de la charge de DEL (DEL) à l'aide d'une rétroaction de courant de charge (R1).

3. Lampe de remplacement à DEL selon l'une quelconque des revendications précédentes, dans laquelle l'interrupteur de shunt (M1) est intégré dans le circuit redresseur (D1, D2, D3, D4).

4. Lampe de remplacement à DEL selon l'une quelconque des revendications précédentes, dans laquelle la détection de l'activation de l'igniteur du ballast est basée sur la détection d'un écart de tension sous la forme d'un creux de tension par rapport à la tension reçue du ballast.

5. Lampe de remplacement à DEL selon la revendication 4, comprenant en outre :
- un module de détection (DIP_p, DIP_n) pour détecter l'écart rapide de tension ;
- un premier compteur (CNT1) pour compter un nombre de creux de tension et émettre un signal de commande pour l'interrupteur de shunt (M1) lorsqu'une quantité souhaitée de creux de tension est atteinte ;
- un second compteur (CNT2) pour réinitialiser le signal de commande (DIM) pour l'interrupteur de shunt (M1) après un temps de retard.

6. Lampe de remplacement à DEL selon l'une quelconque des revendications précédentes, comprenant en outre :
- une diode (D5) couplée entre une connexion de sortie du circuit redresseur et l'une des connexions de sortie,
- un condensateur (C4) pour un couplage en parallèle à la charge de DEL (DEL).

7. Luminaire comprenant :
- un ballast qui est du type lampe à sodium haute pression et lampe à vapeur de mercure, et
- une lampe de remplacement à DEL selon l'une quelconque des revendications précédentes.

8. Luminaire selon la revendication 7, dans lequel le facteur de puissance du luminaire est de 0,8 ou plus.

9. Procédé de commande d'une lampe de remplacement à DEL compatible avec un ballast d'une lampe au sodium haute pression et un ballast d'une lampe à vapeur de mercure, le procédé comprenant les étapes suivantes :
- détection de l'activation d'un igniteur d'un ballast à vapeur de mercure en détectant une composante haute fréquence résultant d'un déclenchement de l'igniteur ;
- lors de la détection de l'activation de l'igniteur, l'augmentation du cycle de service d'un interrupteur de shunt (M1) compris dans la lampe de remplacement à DEL, de telle sorte qu'une tension quadratique moyenne au niveau d'une connexion d'entrée de la lampe de remplacement à DEL est réduite pour que l'igniteur se désactive.
